# EUROPÄISCHE PATENTSCHRIFT

(11) **EP 1 665 866 B1**
(45) Veröffentlichungstag und Bekanntmachung des Hinweises auf die Patenterteilung: **14.12.2011**
(21) Anmeldenummer: 04786751.0
(22) Anmeldetag: 09.09.2004
(51) Int. Cl.: H04Q 9/00, G08B 26/00, H04L 12/403

(54) **SENSOR, STEUERGER T UND VERFAHREN ZUM BETRIEB VON AN EIN STE UERGER T ANGESCHLOSSENEN SENSOREN**
SENSOR, CONTROL UNIT AND METHOD FOR OPERATING SENSORS CONNECTED TO A CONTROL UNIT
DETECTEUR, DISPOSITIF DE COMMANDE ET PROCEDE D'EXPLOITATION DE DETECTEURS RELIES A UN DISPOSITIF DE COMMANDE

(30) Priorität: 11.09.2003 DE 10342044
(43) Veröffentlichungstag der Anmeldung: 07.06.2006
(73) Patentinhaber: ROBERT BOSCH GMBH, 70442 Stuttgart (DE)
(72) Erfinder: HOPF, Gerald, 72768 Reutlingen (DE); OHL, Christian, 72793 Pfullingen (DE); ILLING, Matthias, 72127 Kusterdingen (DE)
(86) Internationale Anmeldenummer: PCT/DE2004/002030
(87) Internationale Veröffentlichungsnummer: WO 2005/024749

(56) Entgegenhaltungen:
- EP-A- 0 035 277
- EP-A- 0 212 106
- DE-A1- 2 836 760

## Beschreibung

### Stand der Technik

Die Erfindung geht aus von einem Sensor zw. einem Verfahren zum Betrieb von an ein Steuergerät angeschlossenen Sensoren.

Aus DE 101 14 504 A1 ist ein Verfahren zur Übertragung von Daten von wenigstens einen Sensor zu einem Steuergerät bekannt. Dabei wird ausgeführt, dass der Sensor über eine Zweidrahtleitung mit dem Steuergerät verbunden ist und über diese Zweidrahtleitung die Energie für seinen Betrieb erhält. Über die Zweidrahtleitung überträgt dann der Sensor mittels Strommodulation permanent seine gemessenen Daten. Nach dem Erhalt der Energie sendet der Sensor sofort, wobei er zunächst eine Sensoridentifikation, eine Statusidentifikation und Sensorenwerte als Daten an das Steuergerät überträgt.

Aus DE 28 36 760 ist ein elektrisches Alarmanlagensystem bekannt, bei dem verschiedene Geber in einer Folgeschaltung an einer Zweidrahtgeberlinie miteinander verbunden sind. Jeder Geber wird nach Abgabe eines Signals den nachfolgenden Geber an die Geberlinie anschalten. Aus EP 0 035 277 ist ein sequentielles Übertragungssystem zum adressenlosen Anschließen mehrerer Teilnehmer an eine Zentrale bekannt. Die zeitliche Steuerung kann dabei dezentral erfolgen, indem die Teilnehmer an die Zentrale nach einer vorgegebenen Zeit den nachfolgenden Teilnehmer weiterschalten. Für die Übertragung zwischen der Zentrale und dem jeweils ausgewählten Teilnehmer können verschiedene Informationsdarstellungen ausgetauscht werden. Dazu zählen Analogsignale, bei denen ein analoger Strom verwendet wird, eine Digitalsignalübertragung mit zwei unterschiedlichen Spannungspegeln, eine digital codierte Analogsignaldarstellung mit einer Pulsfrequenzmodulation, der Pulszahldarstellung oder einer Deltamodulation (dabei wird zwischen zwei Signalpegeln hin und her geschaltet) und eine serielle digitale Codierung, wobei durch durch Codesicherung geschützte Digitalcodes die Daten übertragen werden.

### Vorteile der Erfindung

Der erfindungsgemäße Sensor bzw. das erfindungsgemäße Verfahren zum Betrieb von an ein Steuergerät angeschlossenen Sensoren mit den Merkmalen der unabhängigen Patentansprüche haben demgegenüber den Vorteil, dass nunmehr an eine Leitung mehrere Sensoren seriell hintereinander geschaltet werden können. Damit entsteht ein Quasibus, ohne dass eine aufwendige Buskommunikation und ein Busprotokoll verwendet werden müssen. Der Charakter der Sensoren, dass sie lediglich senden, bleibt hier erhalten. Ausgenutzt wird, dass ab Aufnahme eines ersten Energieniveaus der Sensor anfängt zu senden. Dieses

Energieniveau ist notwendig, um den Sendebetrieb zu gewährleisten. Zusätzlich ist nunmehr vorgesehen, dass nach einer bestimmten Übertragungszeit der erste Sensor seine Übertragung stoppt und die Energie zum nächsten Sensor durchschaltet. Damit kann dieser zweite Sensor nunmehr selbst für die bestimmte Übertragungszeit seine Daten senden und um dann wiederum durchzuschalten. Dieses Verfahren wird soweit getrieben, bis der letzte Sensor gesendet hat. Das Steuergerät schaltet dann nach einer vorgestimmten Zeit, die beispielsweise in Abhängigkeit von der angeschlossenen Zahl der Sensoren abhängen kann, die Energie ganz ab oder zumindest das für das Senden erforderliche erste Energieniveau. Dann kann das Steuergerät die Energie bzw. das erste Energieniveau wieder einschalten, und der erste Sensor sendet wieder seine Daten. Somit steht jedem Sensor ein Zeitschlitz zur Verfügung, den er anhand der Energieaufnahme erkennt. Die Energieaufnahme regelt also hier die Kommunikation. Damit können beispielsweise Druck- oder Beschleunigungssensoren und auch Gewichtssensoren seriell über eine einzige Leitung an das Steuergerät angeschlossen werden. Dies spart Verkabelungsaufwand, ohne dass dies durch eine komplizierte Technik kompensiert werden müsste.

Die Anwendung des erfindungsgemäßen Sensors bzw. Steuergerät bzw. Verfahrens ist daher primär in der Rückhaltesystemtechnik zu sehen, da vor allem hier periphere Sensoren im Fahrzeug verteilt sind, die mit dem Steuergerät kommunizieren können. Auch andere Sensoren, wie die Insassenerkennung mittels Gewichtssensoren, das sind beispielsweise Gewichtsmessbolzen, können so in einfacher Weise über die doch begrenzte Anzahl von Schnittstellen an das Steuergerät angeschlossen werden. Ein aufwendiger Bus ist daher nicht notwendig. Neben der Einsparung an Kabeln sind auch weniger Stecker erforderlich. Bestehende Datenformate zur Datenübertragung können weiter verwendet werden. Im allgemeinen sollten jedoch gleichartige Sensoren derart seriell miteinander verbunden werden. Insbesondere kann der Vorteil der undirektionalen Kommunikation beibehalten werden, da dies eine erhebliche Vereinfachung der angeschlossenen Bausteine zur Kommunikation möglich macht. Die Sensoren brauchen lediglich Senderbausteine und das Steuergerät lediglich einen Empfängerbaustein.

Weiterhin ist es von Vorteil, dass der Senderbaustein bei Erhalt der Energie eine Stromsenke einschaltet. Daran erkennt dann das Steuergerät einen Stromanstieg auf der Leitung der beispielsweise im Steuergerät als Spannungsanstieg an einem Shuntwiderstand gemessen werden kann. Damit werden dann durch das Steuergerät die vom Sensor gesendeten Bits identifiziert.

Durch die in den abhängigen Ansprüchen aufgeführten Maßnahmen und Weiterbildungen sind vorteilhafte Verbesserungen der in den unabhängigen Patentansprüchen angegebenen Sensor, und Verfahren zum Betrieb von an ein Steuergerät angeschlossenen Sensoren möglich.

Besonders vorteilhaft ist, dass die vorgegebene Übertragungszeit, in der der Sensor seine Daten überträgt, bis er in die Ruhephase eintritt und durchschaltet, lediglich zur Übertragung eines vorgegebenen Datenpakets vorgesehen ist, wobei hier beispielsweise eine Länge von 11 Bit verwendet wird.

Zusätzlich kann der Sensor mit einer. Versorgungsleitung zur unterbrechungsfreien Energieaufnahme verbunden sein. Damit wird gewährleitstet, dass auch, wenn der Sensor nicht senden kann, weil ein anderer Sensor sendet, er dennoch Daten mittels eines Sensorelements beispielsweise als Beschleunigungssensor messen kann, um diese Daten dann beispielsweise in einem Speicher zwischenzuspeichern und dann in der Sendephase zu senden. Alternativ oder zusätzlich ist damit gewährleistet, dass der Sensor in der Phase, in der er nicht sendet, mit Energie versorgt wird, so dass dann in der Sendephase kein Neustart (Reset) des Sensors notwendig ist.

Alternativ ist es möglich, dass ein Energiespeicher vorgesehen ist, beispielsweise ein Kondensator, um den Sensor auch in der Ruhephase, in der er lediglich sensiert, mit Energie zu versorgen. Zur Aufladung des Energiespeichers ist eine Stromregelung vorgesehen. Der Enrgiespeicher kann jedoch auch in der Sendephase aufgeladen werden. Dies geschieht dann beispielsweise dadurch, dass der Sensor nicht die ganze Sendephase zum Senden verwendet, sondern einen Teil davon zur Aufladung des Energiespeichers. Beispielsweise kann zu Beginn der Sendephase ein Zeitabschnitt von 100µs zum Aufladen verwendet werden und noch einmal ein gleich langer Zeitabschnitt am Ende der Sendephase.

Es ist sehr vorteilhaft, dass im Ruhezustand der Sensor über die Leitung ein zweites Energieniveau aufnimmt, dass größer 0 ist. Damit ist es dem Sensor möglich, ohne Hilfsenergie oder ohne Energiespeicher weiter aktiv zu bleiben, um ein Reset zu vermeiden. Der Schalter im Sensor schaltet demnach für die Ruhephase auf ein niedrigeres Spannungsniveau und für den nachfolgenden Sensor auf ein höheres Spannungsniveaus, wobei die Spannungsniveaus den unterschiedlichen Energienivaus entsprechen.

### Zeichnung

Ausführungsbeispiele der Erfindung sind in der Zeichnung dargestellt und werden in der nachfolgenden Beschreibung näher erläutert.

Es zeigen
Figur 1 ein Blockschaltbild des Steuergeräts, das mit Sensoren verbunden ist.
Figur 2 den inneren Aufbau des Sendeteils des Sensors
Figur 3 ein Zeitdiagramm und
Figur 4 ein Flussdiagramm.

### Beschreibung

Für die Kommunikation peripherer Sensoren oder Satellitensensoren mit einem Steuergerät, z. B. einem Airbagsteuergerät sind verschiedne Punkt-zu-Punkt oder Busschnittstellen vorgeschlagen worden. Bei den Punkt-zu-Punkt-Schnittstellen kann üblicherweise nur ein Sensor angeschlossen werden. Bei Busschnittstellen ist in der Regel eine mehr oder weniger aufwendige Steuerung für den Buszugriff erforderlich.

Erfindungsgemäß wird ein Sensor, und ein Verfahren vorgeschlagen, die es ermöglichen, eine Punkt-zu-Punkt-Verbindung derart zu erweitern, dass mehrere Sensoren seriell hintereinander an eine Leitung angeschlossen werden können, ohne eine Bussteuerung zu verwenden. Dies wird dadurch erreicht, dass über die Leitung vom Steuergerät die Sensoren die Energie zu ihren Betrieb empfangen und daran erkennen, dass sie nun selbst senden können, wobei ein Sensor hier mittels einer Steuerlogik nur für eine vorgegebene Übertragungszeit sendet, dann sich in einen Ruhezustand begibt und durchschaltet, so dass der nachfolgende Sensor selbst senden kann. Dies wird soweit getrieben, bis der letzte Sensor seine Daten sendet, woraufhin das Steuergerät dann die Energie ganz abschaltet oder auf ein niedrigeres Spannungsniveau umschaltet, um mit dem ersten Sensor wieder neu zu beginnen. Es werden hier insbesondere gleichartige Sensoren miteinander verschaltet, um die Vereinfachung der Verarbeitung zu ermöglichen.

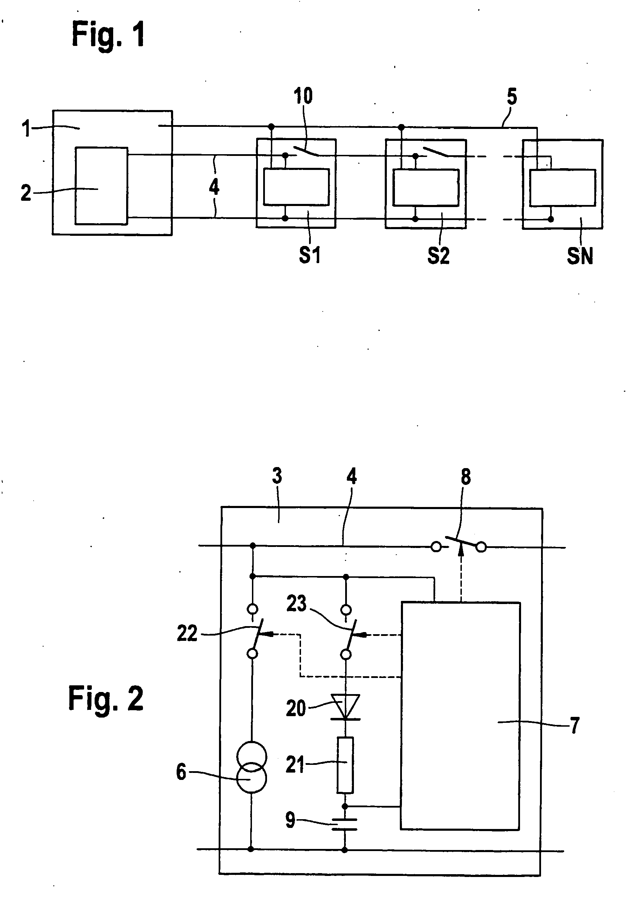

Figur 1 zeigt den prinzipiellen Aufbau der Erfindung. Ein, Steuergerät 1 ist über einen Schnittstellenbaustein 2 über eine zweidrahtige Leitung 4 mit einem Sensor S 1 verbunden. Dieser Sensor S1 weist einen Schalter 10 auf, der einen Draht der Leitung 4 unterbrechen kann. Der Schalter 10 ist üblicherweise ein Transistor.

Seriell hinter dem Sensor S1 ist ein weiterer Sensor S2 geschaltet, der ebenfalls einen solchen Schalter aufweist. Hinter dem Sensor S2 können weitere Sensoren bis zum Sensor SN angeschlossen sein, die nach dem in folgenden beschriebenen Verfahren sequentiell ihre Daten an das Steuergerät 1 senden. Wie oben dargestellt, erhält der Sensor S 1 vom Steuergerät 1 über den Schnittstellenbaustein 2 und die Leitung 4 Energie. Anhand dieser Energieaufnahme erkennt der Sensor S1, dass er nunmehr über die Leitung 4 seine Daten senden kann. Nachdem er seine Daten für eine vorgebebene Übertragungszeit, beispielsweise lediglich für ein Datenpaket von 11 Bitlänge, gesendet hat, begibt sich der Sensor S1 in eine Ruhephase. Gleichzeitig schließt der Sensor S 1 den Schalter 10, um die Energie, die über die Leitung 4 übertragen wird, nunmehr dem Sensor S2 zugänglich ich zu machen.

Dies erkennt der Sensor S2 an einer Spannung, die nun an der Leistung 4 für ihn messbar anliegt. Anhand dieser Energieaufnahme erkennt der Sensor S2, dass er jetzt selbst seine Daten senden kann. Dies führt der Sensor S2 auch für die vorgegebenen Übertragungszeit aus, um dann selbst in den Ruhezustand zu verfallen und seinen Schalter zu schließen, um den nachfolgenden Sensor an die Leitung 4 anzuschließen. Dieses Verhalten wird durchgeführt bis zum letzten Sensor SN, der als letzter seine Daten überträgt. Um wieder mit dem ersten Sensor S1 beginnen zu können, schaltet das Steuergerät 1 die Energiezufuhr über die Leitung 4 und dem Schnittstellenbaustein 2 ab. Dann schaltet das Steuergerät 1 über den Schnittstellenbaustein 2 die Energiezufuhr über die Leitung 4 wieder zu, so dass der Sensor S 1 wieder mit der Übertragung seiner Daten beginnt. Um diesen Zeitpunkt festzustellen, kann dies entweder über eine vorgegebene Zeit erfolgen, die entweder für eine bestimmte Anzahl von hintereinander geschalteten Sensoren oder für eine maximale Anzahl von hintereinander geschalteten Sensoren ausreicht oder es wird dynamisch über Messungen beispielsweise Identifikationen erkannt. Zusätzlich ist hier noch eine Hilfsenergieversorgung 5 vorgesehen, die die Sensoren S1, S2 bis SN permanent mit Energie versorgt. Diese Energieversorgung dient dazu, dass die Sensoren S1, S2 bis SN dauernd messen können. Die nicht gesendeten Messwerte werden zwischengespeichert. Über die Energieaufnahme über die Hilfsenergieleitung 5 kann das Steuergerät 1 auch die Anzahl der angeschlossenen Sensoren erkennen. Auf die Hilfsenergieleitung kann auch verzichtet werden.

Es ist möglich, dass der Schalter 10 in der Ruhephase den Sensor S 1 auf ein niedriges Spannungsniveau schaltet, das es dem Sensor S1 nicht ermöglicht zu senden, ihn aber derart mit Energie versorgt, so dass ein Energiespeicher oder eine Hilfspannungsleitung für den Sensor S1 nicht notwendig ist, um ihn in der Ruhephase nicht ganz abzuschalten. Dies vermeidet wie die Versorgung über die Hilfsspannungsleitung und der Energiespeicher ein komplettes Abschalten des Sensors S1. Das Einschalten für die Sendephase würde dann ein Reset bedeuten, das aufgrund seiner möglicherweise unvorhersehbaren Effekte und Belastungen nicht wünschenswert ist. Alternativ sind jedoch diese anderen Möglichkeiten gegeben: Energie ganz in der Ruhephase abschalten, Hilsenergieleitung verwenden, Energiespeicher verwenden.

Figur 2 zeigt den inneren Aufbau des Sendeteils der Sensoren S1, S2 bis SN. Hier wird eine Alternative zur Energieversorgung des Sensors während der Ruhephase dargestellt. Ein Sensor 3 weist wie oben dargestellt, einen Schalter 8 auf, der die Leitung zum nachfolgenden Sensor unterbricht oder schließt. Der Schalter wird durch eine Steuerlogik 7 gesteuert, die den Schalter schließt, sobald der Sensor 3 seine Daten über die Leitung 4 gesendet hat. Zum Senden wird die Stromsenke 6 verwendet, die über einen Schalter 22 mit der Leitung 4 verbunden ist. Der Schalter 22 wird wiederum von der Steuerlogik 7 betätigt und zwar so, dass die Daten durch diese Pulsmodulation erzeugt und gesendet werden. Die Stromsenke 6 ist auf ihre anderen Seite mit dem zweiten Draht der Leitung 4 verbunden. Parallel dazu ist ein Zweig mit einem Schalter 23, der ebenfalls von der Steuerlogik 7 betätigt wird, einer Diode 20, einem Vorwiderstand 21 und einem Kondensator 9 geschaltet. Der Kondensator 9 dient zur Aufladung, um während der Ruhephase den Sensor 3 mit Energie zu versorgen. Soll also der Kondensator 9 geladen werden, wird der Schalter 23 geschlossen, um Energie über die Leitung 4 zur Ladung des Kondensators 9 aufzunehmen. Zur Gleichrichtung wird die Diode 20 verwendet. Die Steuerlogik 7 misst die Spannung über dem Kondensator 9, um die gespeicherte Energie zu überwachen. Der Aufbau des hier dargestellten Sendeteils des Sensors ist bei jedem Sensor gleich.

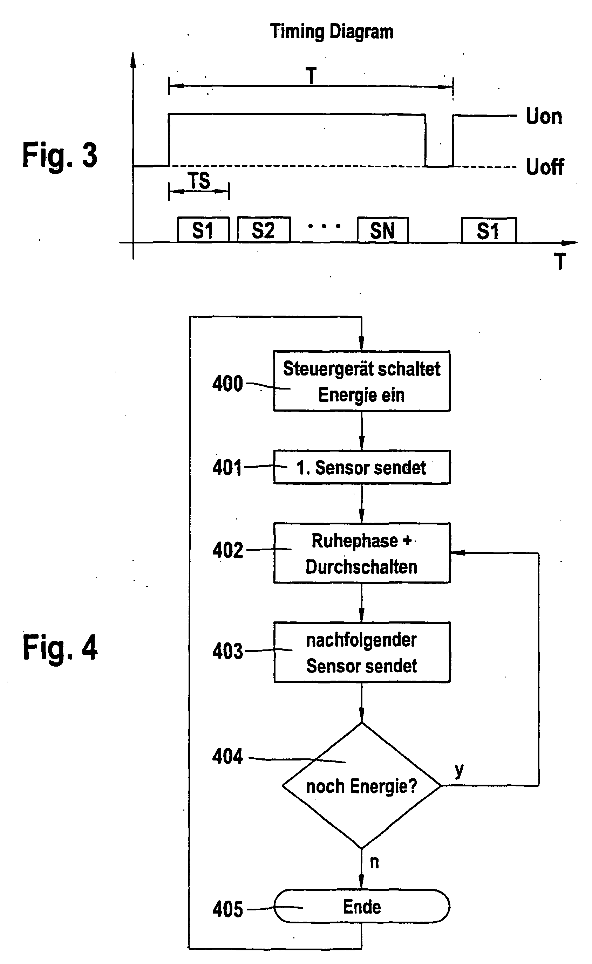

Figur 3 zeigt ein Spannungszeitdiagramm für die über die Leitung 4 zugeführte Energie und die Sendefenster der einzelnen Sensoren. Im oberen Zeitablauf ist für die Zeit T die Spannung von Uoff auf Uon von ca. 90% der Zeit T geschaltet und liefert somit Energie an die seriell hintereinander geschalteten Sensoren S1, S2 bis SN. Nur für die letzten 10% ist die Energie auf 0 geschaltet, so dass in dieser Zeit kein Sensor senden kann. Dann wird wieder auf die Energie Uon geschaltet, um den ersten Sensor S1 zum Senden wiederum zu bewegen. Die Zeit T ist derart bemessen, dass alle Sensoren S1, S2 bis SN senden können. Der Zeitabschnitt in dem die hier dargestellte Spannung auf Uoff geschaltet ist, kann sehr klein sein beispielsweise auch nur 1% von T. Dieses Ausschalten dient lediglich dazu, den Prozess wieder zu beginnen. Darunter sind auf der Zeitachse die korrespondierenden Sendefenster TS der Sensoren S1, S2 bis SN dargestellt. Die Sensoren können nur während der Zeit TS die voreingestellt ist ihre Daten übertragen. Dann wird durchgeschaltet, um den nächsten Sensor das Senden zu ermöglichen. Damit werden sequentiell die Daten der Sensoren S1, S2 bis SN übertragen. Dies geschieht solange, solange die Spannung also die Energiezufuhr auf der Leitung 4 auf Uon ist. Es werden hier äquivalente Spannungen dargestellt. Auf die Leitung 4 wird ein Gleichstrom aufgeprägt, der der Spannung Uon über einen Shuntwiderstand entspricht. Durch zyklisches Wiederholen des hier beschriebenen Vorgangs wird eine kontinuierliche Datenübertragung gewährleistet.

Wie oben dargestellt kann der interne Energiespeicher 9 beispielsweise während der Datenübertragung vom Sensor zum Steuergerät im Zeitfenster TS aufgeladen werden. Die gespeicherte Energie kann zur Versorgung des Sensors verwendet werden, während andere Sensoren Daten übertragen und für die Zeit, in der die Spannungsversorgung durch das Steuergerät 1 kurzfristig nicht besteht oder durch einen geöffneten Schalter an einem der vorgeschalteten Sensoren unterbrochen ist. Ein gleichmäßiger Ladestrom kann z. B. erzielt werden, in dem der Strom, der in den Sensor fließt, durch eine geeignete Stromregelung geregelt wird. Dadurch werden Änderungen des Ruhstrompegels vermieden.

Figur 4 zeigt ein Flussdiagramm des erfindungsgemäßen Verfahrens. Im Verfahrensschritt 400 schaltet das Steuergerät 1 die Energie auf die Leitung 4 durch, so dass der erste Sensor S 1 mit Energie versorgt wird. Daraufhin sendet der Sender S 1 im Verfahrensschritt 401 seine Daten. Dies jedoch nur für die Zeit TS. Nach Ablauf der Zeit TS geht das erste Sensor im Verfahrensschritt 402 in eine Ruhephase und schaltet den Schalter 10 durch, so dass der darauf folgende Sensor S2 an die Energieversorgung und die Leitung 4 durchgeschaltet wird. Daraufhin kann der nachfolgende Sensor S2 im Verfahrensschritt 403 seine Daten senden. Im Verfahrensschritt 404 wird geprüft, ob noch Energie auf der Leitung 4 anliegt, wenn ja, geht der Sensor S2 in die Ruhephase und schaltet seinen Schalter durch, so dass der nachfolgende Sensor nun senden kann. Wurde jedoch im Verfahrensschritt 405 festgestellt, dass keine Energie mehr auf der Leitung 4 ist, endet das Verfahren in seinem ersten Zyklus. Daraufhin wird zu Verfahrensschritt 400 zurückgesprungen. Anstatt der Energieüberprüfung kann auch die Zeitüberprüfung verwendet werden, die jedoch dann zur Energieabschaltung führt.

## Patentansprüche

1. Erster Sensor für ein Rückhaltesystem mit einem Senderbaustein (3) zur Übertragung von Daten über eine Leitung (4), wobei der erste Sensor (S1, S2, SN) über die Leitung (4) Energie erhält und der Senderbaustein (3) sofort nach Erhalt von einem ersten Energieniveau die Daten überträgt, **dadurch gekennzeichnet, dass** der erste Sensor (S1, S2, SN) nach einer vorgegebenen Übertragungszeit (TS) in einen Ruhezustand übergeht und einen ersten Schalter (8, 10) derart betätigt, so dass ein zweiter Sensor (S2), der in Reihe zum ersten Sensor (S1) geschaltet ist, nunmehr das erste Energieniveau erhält, dass der Senderbaustein (3) bei Erhalt der Energie eine Stromsenke (6) einschaltet, wobei ein zweiter Schalter (22) die Stromsenke (6) mit der Leitung (4) verbindet, wobei der zweite Schalter (22) durch eine Steuerlogik (7) derart betätigt wird, dass die Daten durch diese Pulsmodulation erzeugt und gesendet werden.

2. Sensor nach Anspruch 1, **dadurch gekennzeichnet, dass** die vorgegebene Übertragungszeit (TS) zur Übertragung eines vorgegebenen Datenpakets vorgesehen ist.

3. Sensor nach Anspruch 2, **dadurch gekennzeichnet, dass** das Datenpaket eine Länge von 11 Bit hat.

4. Sensor nach einem der vorherigen Ansprüche, **dadurch gekennzeichnet, dass** der erste Sensor (S1) mit einer Versorgungsleitung (5) zur unterbrechungsfreien Energieaufnahme verbunden ist.

5. Sensor nach einem der Ansprüche 1 bis 3, **dadurch gekennzeichnet, dass** der erste Sensor (S1) einen Energiespeicher (9) zur unterbrechungsfreien Energieversorgung aufweist.

6. Sensor nach Anspruch 5, **dadurch gekennzeichnet, dass** zur Aufladung des Energiespeichers (9) eine Stromregelung vorgesehen ist.

7. Sensor nach Anspruch 1, **dadurch gekennzeichnet, dass** der Sensor derart konfiguriert ist, dass der Sensor (S1) im Ruhezustand über die Leitung (4) ein zweites Energieniveau erhält, das größer 0 ist.

8. Verfahren zum Betrieb von an ein Airbag-Steuergerät (1) angeschlossenen Sensoren (S1, S2, SN) für ein Rückhaltesystem, wobei das Steuergerät (1) die Energie für die Sensoren (S1, S2, SN) über eine Leitung (4) bereitstellt, über die auch die Daten der Sensoren übertragen werden, **dadurch gekennzeichnet, dass** die Sensoren (S1, S2, SN) in Reihe geschaltet werden, das ein dem Steuergerät (1) nächstliegender Sensor (S1) nach Aufnahme von einem ersten Energieniveau Daten an das Steuergerät (1) für eine vorbestimmte Übertragungszeit (TS) sendet, indem bei Erhalt der Energie eine Stromsenke (6) durch einen Senderbaustein (3) eingeschaltet wird, wobei ein Schalter (22) die Stromsenke (6) mit der Leitung (4) verbindet, wobei der Schalter (22) durch eine Steuerlogik (7) derart betätigt wird, dass die Daten durch diese Pulsmodulation erzeugt und gesendet werden, dass dann der nächstliegende Sensor (S1) in einen Ruhezustand übergeht und einen nachfolgenden Sensor (S2) zur Datenübertragung zum Steuergerät (1) durchschaltet, dass das Steuergerät (1), nachdem alle Sensoren (S1, S2, SN) Daten übertragen haben, das erste Energieniveau abschaltet.

## Claims

1. First sensor for a restraint system, having a transmitter module (3) for transmitting data via a line (4), the first sensor (S1, S2, SN) receiving energy via the line (4), and the transmitter module (3) transmitting the data immediately after receiving a first energy level, **characterized in that** the first sensor (S1, S2, SN) changes to a quiescent state after a predefined transmission time (TS) and operates a first switch (8, 10) in such a manner that a second sensor (S2) which is connected in series with the first sensor (S1) now receives the first energy level, **in that** the transmitter module (3) switches on a current sink (6) upon receiving the energy, a second switch (22) connecting the current sink (6) to the line (4), and the second switch (22) being operated by a control logic unit (7) in such a manner that the data are generated and transmitted by this pulse modulation.

2. Sensor according to Claim 1, **characterized in that** the predefined transmission time (TS) is provided for the purpose of transmitting a predefined data packet.

3. Sensor according to Claim 2, **characterized in that** the data packet has a length of 11 bits.

4. Sensor according to one of the preceding claims, **characterized in that** the first sensor (S1) is connected to a supply line (5) for uninterruptible energy consumption.

5. Sensor according to one of Claims 1 to 3, **characterized in that** the first sensor (S1) has an energy store (9) for uninterruptible energy supply.

6. Sensor according to Claim 5, **characterized in that** a current control means is provided for the purpose of charging the energy store (9).

7. Sensor according to Claim 1, **characterized in that** the sensor is configured such that the sensor (S1) receives a second energy level, which is greater than 0, via the line (4) in the quiescent state.

8. Method for operating sensors (S1, S2, SN) for a restraint system which are connected to an airbag control unit (1), the control unit (1) providing the energy for the sensors (S1, S2, SN) via a line (4) via which the data from the sensors are also transmitted, **characterized in that** the sensors (S1, S2, SN) are connected in series, **in that** a sensor (S1) closest to the control unit (1) transmits data to the control unit (1) for a predetermined transmission time (TS) after receiving a first energy level by virtue of a current sink (6) being switched on by a transmitter module (3) upon receiving the energy, a switch (22) connecting the current sink (6) to the line (4), the switch (22) being operated by a control logic unit (7) in such a manner that the data are generated and transmitted by this pulse modulation, **in that** the closest sensor (S1) then changes to a quiescent state and turns on a following sensor (S2) for transmitting data to the control unit (1), and **in that** the control unit (1) disconnects the first energy level after all sensors (S1, S2, SN) have transmitted data.

## Revendications

1. Premier détecteur de système de retenue équipé d'une borne émettrice (3) pour la transmission de données via un câble (4), le premier détecteur (S1, S2, SN) recevant de l'énergie via le câble (4) et la borne émettrice (3) transmettant immédiatement les données à réception d'un premier niveau d'énergie, **caractérisé en ce que** le premier détecteur (S1, S2, SN) passe, après un temps de transmission prédéfini (TS), dans un état de veille et **en ce qu'**un premier commutateur (8, 10) est actionné de telle sorte qu'un deuxième détecteur (S2), connecté en série par rapport au premier détecteur (S1), soit commuté, ledit détecteur recevant alors le premier niveau d'énergie, que la borne émettrice (3) déclenche, à réception de l'énergie, une baisse de courant (6), un deuxième commutateur (22) reliant la baisse de courant (6) au câble (4), le deuxième commutateur (22) étant actionné de telle sorte par une logique de commande (7) que les données sont produites et envoyées par le biais de la modulation pulsée.

2. Détecteur selon la revendication 1, **caractérisé en ce que** le temps de transmission prédéfini (TS) est prévu pour la transmission d'un paquet de données prédéfini.

3. Détecteur selon la revendication 2, **caractérisé en ce que** le paquet de données présente une longueur de 11 bits.

4. Détecteur selon l'une quelconque des revendications précédentes, **caractérisé en ce que** le premier détecteur (S1) est relié à un câble d'alimentation (5) pour recevoir l'énergie sans interruption.

5. Détecteur selon l'une quelconque des revendications 1 à 3, **caractérisé en ce que** le premier détecteur (S1) comporte un accumulateur d'énergie (9) permettant une alimentation en énergie sans interruption.

6. Détecteur selon la revendication 5, **caractérisé en ce qu'**une régulation du courant est prévue pour charger l'accumulateur d'énergie (9).

7. Détecteur selon la revendication 1, **caractérisé en ce que** le détecteur est configuré de telle sorte que le détecteur (S1) reçoit à l'état de veille un deuxième niveau d'énergie supérieur à 0 via le câble (4).

8. Procédé d'exploitation de détecteurs (S1, S2, SN) raccordés à un appareil de commande d'airbag (1) pour un système de retenue, l'appareil de commande (1) mettant de l'énergie à disposition des détecteurs (S1, S2, SN) via un câble (4) via lequel les données des détecteurs sont également transmises, **caractérisé en ce que** les détecteurs (S1, S2, SN) sont branchés en série, qu'un détecteur (S1) suivant l'appareil de commande (1) émet, à réception d'un premier niveau d'énergie, des données à l'appareil de commande (1) pendant un temps de transmission prédéfini (TS), **en ce qu'**à réception de l'énergie, une baisse de courant (6) se produit à travers une borne émettrice (3), un commutateur (22) reliant la baisse de courant (6) au câble (4), le commutateur (22) étant actionné de telle sorte par une logique de commande (7) que les données sont produites et envoyées par cette modulation pulsée, que le détecteur (S1) suivant passe dans un état de veille et qu'un détecteur (S2) suivant se connecte pour la transmission des données à l'appareil de commande (1), que l'appareil de commande (1) déconnecte le premier niveau d'énergie une fois que tous les détecteurs (S1, S2, SN) ont transmis leurs données.
